(19) Europäisches Patentamt / European Patent Office / Office européen des brevets

(11) **EP 3 844 943 B1**

(12) **EUROPÄISCHE PATENTSCHRIFT**

(45) Veröffentlichungstag und Bekanntmachung des Hinweises auf die Patenterteilung:
**15.03.2023   Patentblatt 2023/11**

(21) Anmeldenummer: **19732602.8**

(22) Anmeldetag: **19.06.2019**

(51) Internationale Patentklassifikation (IPC):
**H04N 9/76** (2006.01)  **H04N 1/60** (2006.01)
**H04N 7/18** (2006.01)  **H04N 13/246** (2018.01)
**G06T 7/90** (2017.01)  **H04N 13/133** (2018.01)
**B60R 1/00** (2006.01)  **H04N 1/387** (2006.01)
**H04N 13/15** (2018.01)  **H04N 5/232** (2006.01)

(52) Gemeinsame Patentklassifikation (CPC):
**H04N 13/15; B60R 1/00; H04N 7/181; H04N 9/76; H04N 13/133; H04N 13/239; H04N 13/243;** B60R 2300/303; H04N 1/3876; H04N 13/246; H04N 23/698; H04N 2013/0077

(86) Internationale Anmeldenummer:
**PCT/EP2019/066165**

(87) Internationale Veröffentlichungsnummer:
**WO 2020/043342 (05.03.2020 Gazette 2020/10)**

(54) **VERFAHREN ZUR ANZEIGE EINES MODELLS EINER UMGEBUNG, STEUERGERÄT UND FAHRZEUG**

METHOD FOR DISPLAYING A MODEL OF AN ENVIRONMENT, CONTROL APPARATUS AND VEHICLE

PROCÉDÉ D'AFFICHAGE D'UN MODÈLE D'UN ENVIRONMENT, APPAREIL DE COMMANDE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2018   DE 102018214602**

(43) Veröffentlichungstag der Anmeldung:
**07.07.2021   Patentblatt 2021/27**

(73) Patentinhaber: **Robert Bosch GmbH
70442 Stuttgart (DE)**

(72) Erfinder:
• **RAPROEGER, Dirk
31515 Wunstorf (DE)**
• **HERZOG, Paul Robert
31137 Hildesheim (DE)**
• **TORRES LOPEZ, Lidia Rosario
53225 Bonn (DE)**
• **LAUER, Paul-Sebastian
30175 Hannover (DE)**
• **BROSCH, Uwe
31141 Hildesheim (DE)**

(56) Entgegenhaltungen:
CN-B- 106 254 844     US-A1- 2012 002 050
US-A1- 2015 138 312     US-A1- 2017 166 126

**EP 3 844 943 B1**

**Beschreibung**

Die vorliegende Erfindung betrifft ein Verfahren zur Anzeige eines Modells einer Umgebung eines Ego-Objektes, ein Steuergerät zur Durchführung des Verfahrens sowie ein Fahrzeug mit dem Steuergerät.

Stand der Technik

Das Dokument US 9,509,909 B2 offenbart ein Verfahren zur Anzeige eines Umgebungsmodells eines Fahrzeugs in Abhängigkeit mehrerer Weitwinkelkameras, welche an einem Fahrzeug angeordnet sind.

Die Aufgabe der vorliegenden Erfindung ist es, ein Verfahren zur Anzeige eines Modells einer Umgebung eines Ego-Objektes zu verbessern.

Offenbarung der Erfindung

Die vorstehende Aufgabe wird gemäß der unabhängigen Ansprüche 1, 8 und 9 gelöst.

Die vorliegende Erfindung betrifft ein Verfahren zur Anzeige eines Modells einer Umgebung eines Ego-Objektes, insbesondere eines Fahrzeugs als Ego-Objekt, wobei das Verfahren vorteilhafterweise während des Betriebs des Fahrzeugs durchgeführt wird. Beispielsweise wird das Verfahren während eines Einparkvorgangs des Fahrzeuges durchgeführt. Alternativ kann das Ego-Objekt auch ein Gebäude sein, beispielsweise wird das Verfahren zur Unterstützung einer Überwachung des Gebäudes durchgeführt. Durch das Verfahren resultiert vorteilhafterweise ein realistischerer Farbeneindruck des angezeigten Modells der Umgebung des Ego-Objektes.

Das Verfahren zur Anzeige eines Umgebungsmodells eines Ego-Objektes weist eine Erfassung eines ersten Kamerabildes mittels einer ersten Kamera und eine Erfassung eines zweiten Kamerabildes mittels einer zweiten Kamera auf, wobei das erste Kamerabild und das zweite Kamerabild einen Überlappungsbereich aufweisen. Die erste Kamera und/oder die zweite Kamera weisen vorteilhafterweise eine Weitwinkeloptik auf. Das erste und zweite Kamerabild umfassen ferner jeweils eine Vielzahl von Bildpunkten beziehungsweise Bildpixeln mit jeweils einer Farbinformation, beispielsweise einer Farbcodierung beziehungsweise eine Chrominanz oder einem Helligkeitswert beziehungsweise einer Luminanz. Die Farbinformation kann beispielsweise drei Parameter umfassen, beispielsweise einen Rotwert, einen Grünwert und einen Blauwert. Es kann optional vorgesehen sein, dass das erste und/oder zweite Kamerabild nach der Erfassung des ersten beziehungsweise zweiten Kamerabildes in einem Verfahrensschritt vorverarbeitet werden. Diese optionale Vorverarbeitung umfasst beispielsweise eine Linierarisierung in Abhängigkeit einer Kamerakennlinie oder eines Tonemappings und/oder eine Gammakorrektur und/oder eine Kompensation kameraspezifischer Bildartefakte. Bildartefakte sind beispielsweise eine Vignettierung beziehungsweise eine Verdunkelung in Randbereichen des ersten und/oder zweiten Kamerabildes. Diese optionale Vorverarbeitung erfolgt vorteilhafterweise nur an vorgegebenen Punkten und/oder in der Umgebung der vorgegebenen Punkte. In einem nachfolgenden Schritt werden Bildpunkte des ersten Kamerabildes und die Bildpunkte des zweiten Kamerabildes mindestens zu vorgegebenen Punkten einer dreidimensionalen Gitterstruktur gemäß einer jeweils vorgegebenen Zuordnungsvorschrift zugeordnet, wobei die vorgegebenen Punkte in einem Bereich der dreidimensionalen Gitterstruktur angeordnet sind, welcher den Überlappungsbereich des ersten und zweiten Kamerabildes repräsentiert. Die vorgegebenen Punkte sind dabei vorteilhafterweise gleichmäßig in diesem Bereich der dreidimensionalen Gitterstruktur angeordnet. Vorteilhafterweise sind in dem Bereich der Gitterstruktur, welche den Überlappungsbereich repräsentiert mehr als hundert vorgegebene Punkte vorgesehen. Die vorgegebene Zuordnungsvorschrift ist beispielsweise eine Look-Up-Tabelle, welche vorteilhafterweise auch dazu eingerichtet ist, Kamerabilder, welche mittels einer Weitwinkeloptik erfasst wurden, zu entzerren. Den vorgegebenen Punkten der Gitterstruktur wird jeweils eine Farbinformation des ersten Kamerabildes und des zweiten Kamerabildes zugeordnet. Mit anderen Worten werden einem vorgegebenen Punkt jeweils eine erste Farbinformation des ersten Kamerabildes und eine zweite Farbinformation des zweiten Kamerabildes zugeordnet. Anschließend erfolgt für jeden vorgegebenen Punkt der dreidimensionalen Gitterstruktur eine Ermittlung eines Farbinformationsunterschiedes in Abhängigkeit der jeweils zugeordneten Farbinformation des ersten und zweiten Kamerabildes beziehungsweise in Abhängigkeit der dort zugeordneten ersten Farbinformation und der dort zugeordneten zweiten Farbinformation. Mit anderen Worten werden die Farbinformationsunterschiede an einer festgelegten Auswahl an Koordinaten beziehungsweise vorgegebenen Punkten der Gitterstruktur ermittelt. Danach wird ein Gütewert an jedem vorgegebenen Punkt jeweils für diesen vorgegebenen Punkt in Abhängigkeit des ermittelten Farbinformationsunterschiedes an dem jeweiligen vorgegebenen Punkt ermittelt. Hohe Gütewerte repräsentieren beispielsweise eine gute Übereinstimmung der Farbinformation zwischen den jeweiligen Bildpunkten des ersten und des zweiten Kamerabildes. Niedrige Gütewerte repräsentieren beispielsweise eine Verzerrung oder eine Verdeckung im Bild. In einem weiteren Schritt erfolgt eine Bestimmung einer globalen Farbtransformationsmatrix in Abhängigkeit der ermittelten Vielzahl an Farbinformationsunterschieden an den vorgegebenen Punkten, wobei die Farbinformationsunterschiede jeweils in Abhängigkeit des ermittelten Gütewertes des jeweiligen vorgegebenen Punktes gewichtet werden. Somit werden beispielsweise Farbinformationsunterschiede mit einem Gütewert unterhalb eines Schwellenwertes nicht zur Bestimmung der globalen Farbtransformationsmatrix berücksichtigt. Dadurch werden zur Ermittlung der globalen Farbtransformationsmatrix vorteilhafterweise Farbinformationsunterschiede vorgegebener Punkte der Gitterstruktur nicht berücksichtigt, wenn die jeweiligen vorgegebenen Punkte beispielsweise in verzerrten Bildbereichen, gesättigten (d.h. stark überbelichteten oder stark abgeschatteten) Bereichen liegen. Anschließend wird das zweite Kamerabild, insbesondere an das erste Kamerabild, zumindest in einem Teilbereich in Abhängigkeit der bestimmten Farbtransformationsmatrix angepasst. Dadurch resultiert der Vorteil, dass eine Harmonisierung beziehungsweise Angleichung der Farbinformationen des zweiten Kamerabildes an die Farbinformationen des ersten Kamerabildes mit geringer Rechenzeit erfolgt. In einem weiteren Schritt des Verfahrens wird das Modell der Umgebung des Ego-Objektes in Abhängigkeit der dreidimensionalen Gitterstruktur, zumindest eines Teilbereichs des ersten Kamerabildes und zumindest eines Teilbereichs des angepassten zweiten Kamerabildes angezeigt. Durch das Verfahren werden die Farbinformationen zwischen dem erfassten ersten und zweiten Kamerabild harmonisiert, so dass ein Nutzer den Eindruck hat, dass das angezeigte Modell realistisch, aus einer gemeinsamen Perspektive erfasst worden und angezeigte Farb- und Helligkeitsverläufe realistisch sind. Durch die dreidimensionale Gitterstruktur können die vorgegebenen Punkte in einem dreidimensionalen Bereich der Gitterstruktur, d.h. nicht nur im ebenen Bodenbereich der Gitterstruktur, angeordnet sein, wodurch die Farbharmonisierung beziehungsweise die Anpassung zwischen den zwei Kamerabildern erheblich verbessert wird, da beispielsweise große und einheitliche Himmelflächen des ersten und zweiten Kamerabildes zur Ermittlung der Farbtransformationsmatrix berücksichtigt werden. Des Weiteren wird durch die Verwendung des Gütewertes beziehungsweise Gütemaßes ausgeschlossen, dass die Farbtransformationsmatrix in Abhängigkeit von Bildbereichen der Kamerabilder erfolgt, welche verschattete und/oder in der Gitterstruktur verzerrte Objekte in der Umgebung des Ego-Objektes repräsentieren.

Gemäß der Erfindung umfasst das Verfahren eine Erfassung von Abstandsdaten zwischen dem Ego-Objekt und Objekten in der Umgebung des Ego-Objektes auf, wobei die Abstandsdaten auch eine Höheninformation umfassen kann. Vorteilhafterweise erfolgt die Erfassung der Abstandsdaten beispielsweise wenigstens mittels einer Monokamera durch ein structure-from-motion-Verfahren, mittels einer Stereokamera, mittels Ultraschallsensoren, mittels Radarsensoren und/oder mittels Lidarsensoren. Es kann vorgesehen sein, dass unterschiedliche Sensortypen gleichzeitig oder nacheinander zur Erfassung der Abstandsdaten verwendet werden. Alternativ oder zusätzlich kann es vorgesehen sein, zumindest Teile der Abstandsdaten aus einem elektronischen Speicher zu laden, wobei der elektronische Speicher insbesondere in einer Servervorrichtung angeordnet sein kann. Beispielsweise können die Abstandsdaten alternativ oder zusätzlich aus einer Karte und/oder aus einem Fahrzeugmodell geladen werden, welche im elektronischen Speicher gespeichert sein können. Anschließend erfolgt eine Erzeugung beziehungsweise Anpassung einer dreidimensionalen Gitterstruktur in Abhängigkeit der erfassten Abstandsdaten. Die erzeugte beziehungsweise angepasste Gitterstruktur repräsentiert vorteilhafterweise die Abstände zwischen dem Ego-Objekt und Objekten in der Umgebung des Ego-Objektes. Die Anzeige des Umgebungsmodells erfolgt zusätzlich in Abhängigkeit der angepassten dreidimensionalen Gitterstruktur. Dadurch werden Verzerrungen, welche auf naheliegenden Objekten in der Umgebung des Ego-Objektes basieren, minimiert und die Darstellung realistischer, insbesondere, wenn sich das Ego-Objekt bewegt.

In einer bevorzugten Weiterführung erfolgt die Ermittlung des Gütewerts und/oder die Bestimmung der globalen Farbtransformationsmatrix zusätzlich in Abhängigkeit der erfassten Abstandsdaten. Beispielsweise wird der Gütewert eines vorgegebenen Punktes zusätzlich in Abhängigkeit eines lateralen Abstands zwischen dem zugeordneten Abstand des vorgegebenen Punktes und dem Ego-Objekt und/oder in Abhängigkeit einer Höheninformation des vorgegebenen Punktes ermittelt. Dadurch kann eine abstandsabhängige Auswahl der vorgegebenen Punkte zur Bestimmung der Farbtransformationsmatrix erfolgen, beispielsweise werden vorgegebenen Punkte in einem nahen Abstand, beispielsweise kleiner 1 Meter und/oder mit einer Höhe kleiner 0,3 Meter, und/oder in einem entfernten Abstand, beispielsweise größer 5 Meter und/oder mit einer Höhe kleiner 0,3 Meter, zur Bestimmung der Farbtransformationsmatrix nicht berücksichtigt.

In einer besonders bevorzugten Weiterführung werden zur Bestimmung einer globalen Farbtransformationsmatrix nur vorgegebene Punkte der dreidimensionalen Gitterstruktur berücksichtigt, welche in einem Bereich größer oder gleich eines lateralen Mindestabstands und/oder kleiner oder gleich einem vorgegebenen lateralen Abstand zum Ego-Objekt liegen, wobei der Mindestabstand insbesondere 1 Meter und der vorgegebene Abstand insbesondere 5 Meter beträgt. Durch diese Weiterführung werden bei der Anpassung des zweiten Kamerabildes die Farbinformationen zwischen dem erfassten ersten und zweiten Kamerabild besser harmonisiert, so dass ein Nutzer den Eindruck hat, dass das angezeigte Modell realistischer ist.

Es kann in einer anderen Ausgestaltung des Verfahrens vorgesehen sein, dass eine Erkennung von Segmenten im ersten Kamerabild und/oder im zweiten Kamerabild durchgeführt wird, insbesondere mittels wenigstens eines neuronalen Netzes. Mögliche Segmente sind beispielsweise zusammengehörige Bereiche im ersten und/oder zweiten Kamerabild, beispielsweise ein Himmelbereich und/oder ein Gebäudebereich und/oder ein bepflanzter Bereich und/oder ein Fahrbahnbereich. Die Ermittlung des Gütewertes erfolgt in dieser Ausgestaltung zusätzlich in Abhängigkeit der erkannten Segmente. Durch diese Ausgestaltung werden vorgegebene Punkte durch den Gütewert in einem besonders zur Ermittlung der Farbtransformationsmatrix geeigneten Bereich beziehungsweise Segmenten des ersten und zweiten Kamerabildes höher gewichtet beziehungsweise stärker berücksichtigt, beispielsweise die vorgegebenen Punkte im Himmelbereich. Dadurch erfolgt die Anpassung des zweiten Kamerabildes für einen Betrachter besonders gut, das heißt, dass durch diese Ausgestaltung die Farbinformationen der Bildpixel des zweiten Kamerabildes an die Farbinformationen der Bildpixel des ersten Kamerabilds angenähert beziehungsweise harmonisiert werden, so dass für einen Betrachter Farbinformationen in dem angezeigten Umgebungsmodell beziehungsweise in einer gemeinsamen Ansicht des ersten und zweiten Kamerabildes realistisch sind.

In einer weiteren Ausgestaltung erfolgt die Ermittlung des Farbinformationsunterschiedes und/oder die Ermittlung des Gütewertes zusätzlich in Abhängigkeit einer Vielzahl an Farbinformationen des ersten und/oder zweiten Kamerabildes in einer Umgebung des jeweiligen vorgegebenen Punktes. Durch diese Ausgestaltung werden vorteilhafterweise zur Ermittlung des Gütewertes Varianzen der Farbinformationen in einem Bereich um die vorgegebenen Punkte berücksichtigt, so dass beispielsweise ein Farbrauschen an den vorgegebenen Punkten einen weniger starken Einfluss auf den ermittelten Gütewert hat. Dadurch wird die Farbinformation des zweiten Kamerabildes sehr gut an diejenige des ersten Kamerabildes angepasst.

Vorzugsweise erfolgt die Ermittlung des Farbinformationsunterschiedes und/oder die Ermittlung des Gütewertes zusätzlich in Abhängigkeit einer Vielzahl an Farbinformationen des ersten und/oder zweiten Kamerabildes entlang mindestens eines Bereichs einer Epipolarlinie des jeweiligen vorgegebenen Punktes. Die Epipolarlinie ergibt sich in Abhängigkeit des ersten Kamerabilds und des zweiten Kamerabilds beziehungsweise ist die Epipolarlinie aufgrund einer Einbaulage und/oder einer Kalibrierung der ersten und zweiten Kamera fest vorgegeben. Durch diese Ausgestaltung werden vorteilhafterweise zur Ermittlung des Gütewertes Farbinformationen in einem Bereich möglicher Verzerrungen um die vorgegebenen Punkte berücksichtigt, so dass beispielsweise ein vorgegebener Punkt, an welchem beispielsweise keine oder eine nur ungenaue Abstandsmessung vorliegt, nur dann einen starken Einfluss auf die Bestimmung der Farbtransformationsmatrix hat, wenn die maximale Varianz der Farbinformationen entlang der zugeordneten Epipolarlinie im ersten und/oder zweiten Kamerabild gering ist. Durch diese Ausgestaltung können für die Bestimmung der Farbtransformationsmatrix relevante Bildpunkte im gering bewölkten Himmel oder auf untexturierten Wänden in der Bestimmung der Farbtransformationsmatrix hoch gewichtet werden. Durch diese Ausführung resultiert des Weiteren der Vorteil, dass nach der Anpassung des zweiten Kamerabildes die Farbinformationen zwischen dem ersten und zweiten Kamerabild besonders gut harmonisiert werden, insbesondere wenn keine oder schlechte Abstandsdaten vorliegen.

Es kann des Weiteren in einer Ausgestaltung vorgesehen sein, dass die Anzeige des gemeinsamen Modells im Überlappungsbereich das erste Kamerabild oder das angepasste zweite Kamerabild oder eine Kombination des ersten und zweiten Kamerabildes aufweist. Mit anderen Worten wird in dieser Ausgestaltung keine einfache Mittelwertbildung zwischen dem ersten und dem zweiten Kamerabild durchgeführt, so dass das angezeigte Modell der Umgebung des Ego-Objektes mit weniger sichtbaren Verzerrungen und somit realistischer dargestellt wird.

Vorteilhafterweise werden in dem Verfahren zusätzlich mindestens ein drittes und ein viertes Kamerabild mit jeweiligen Überlappungsbereichen zum ersten Kamerabild oder zum zweiten Kamerabild um das Ego-Objekt erfasst, so dass insbesondere eine Umgebung um 360° um das Ego-Objekt herum erfasst wird, wobei das dritte Kamerabild und das vierte Kamerabild jeweils durch zwei weitere spezifische Farbtransformationsmatrizen angepasst werden.

Die Erfindung betrifft auch ein Steuergerät zur Durchführung des erfindungsgemäßen Verfahrens.

Ferner betrifft die Erfindung ein Fahrzeug mit dem erfindungsgemäßen Steuergerät.

Weitere Vorteile ergeben sich aus der nachfolgenden Beschreibung von Ausführungsbeispielen mit Bezug zu den Figuren.

Figur 1:      Fahrzeug mit vier Weitwinkelkameras

Figur 2:      Ablaufdiagramm des Verfahrens

Figur 3a:     rechteckige dreidimensionale Gitterstuktur

Figur 3b:     Bereich der dreidimensionale Gitterstuktur mit vorgegebenen Punkten

Figur 3c:     alternative dreidimensionale Gitterstuktur mit vorgegebenen Punkten

Ausführungsbeispiele

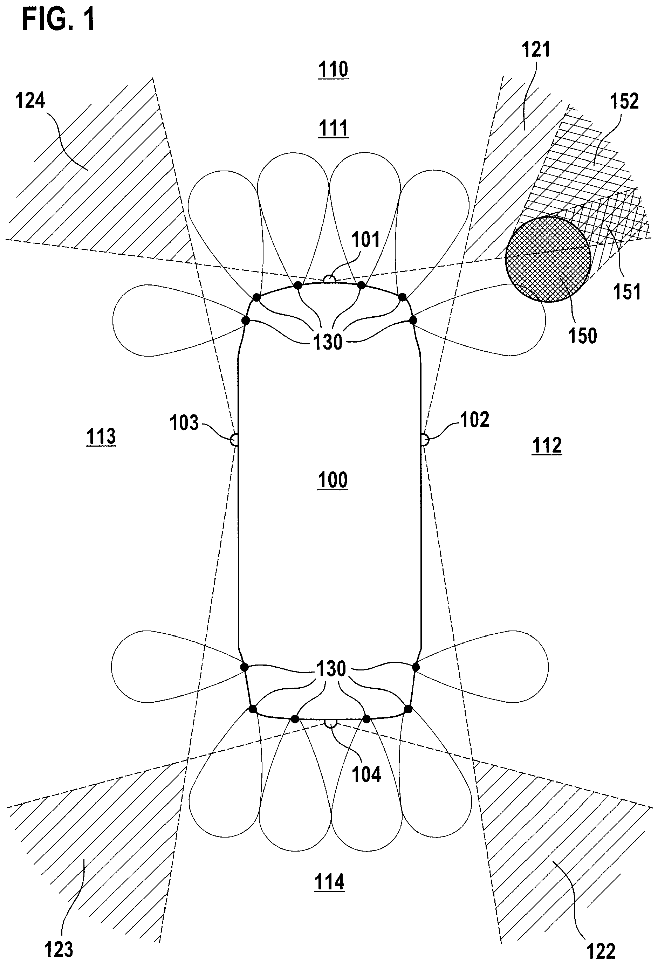

In Figur 1 ist ein Fahrzeug als Ego-Objekt 100 dargestellt. Das Ego-Objekt 100 weist mehrere Ultraschallsensoren als Abstandssensoren 130 auf, welche in diesem Beispiel am Bug und am Heck des Ego-Objekt 100 angeordnet sind. Alternativ oder zusätzlich können als Abstandssensoren 130 mindestens eine Stereokamera, ein Radarsensor und/oder ein Lidarsensor am Ego-Objekt 100 angeordnet sein. Das Ego-Objekt 100 umfasst ferner vier Weitwinkelkameras 101 bis 104, welche jeweils einen Teilbereich einer Umgebung 110 des Ego-Objekts 100 erfassen. Vom Ego-Objekt 100 aus betrachtet, erfasst eine erste Kamera 101 als erstes Kamerabild einen vorderen Umgebungsbereich 111 des Fahrzeugs 100, eine zweite Kamera 102 als zweites Kamerabild einen rechten Umgebungsbereich 112 des Fahrzeugs 100, eine dritte Kamera 103 als drittes Kamerabild einen linken Umgebungsbereich 113 des Fahrzeugs 100 und eine vierte Kamera 104 als viertes Kamerabild einen hinteren Umgebungsbereich 114 des Fahrzeugs 100. Somit erfassen die vier Kameras 101, 102, 103 und 104 gemeinsam die Umgebung 110 des Fahrzeugs 100 vollständig beziehungsweise in 360° um das Fahrzeug 100. Der vordere Umgebungsbereich 111 und der rechte Umgebungsbereich 112 überschneiden beziehungsweise überlappen sich im ersten Überlappungsbereich 121. Der rechte Umgebungsbereich 112 und der hintere Umgebungsbereich 114 überlappen sich im zweiten Überlappungsbereich 122. Der vordere Umgebungsbereich 111 und der linke Umgebungsbereich 113 überlappen sich im vierten Überlappungsbereich 124. Der linke Umgebungsbereich 113 und der hintere Umgebungsbereich 114 überlappen sich im dritten Überlappungsbereich 123. Bei der Erfassung des ersten, zweiten, dritten und vierten Kamerabildes werden diese jeweils separat bezüglich einer Farbinformation der jeweiligen Bildpixel, beispielsweise bezüglich einer Chrominanz oder einer Luminanz angepasst, so dass die im jeweiligen Umgebungsbereich 111, 112, 113 und/oder 114 enthaltene Situation trotz einer gegebenenfalls vorliegenden unterschiedlichen Beleuchtung im jeweiligen Kamerabild detailliert erfasst und dargestellt wird. Durch diese hardwareseitige separate und automatische Anpassung der Farbinformation, beispielsweise in Abhängigkeit der Beleuchtungssituation in der Umgebung 110 und/oder eines Bildpunkt-Histogramms, unterscheiden sich das erste, zweite, dritte und vierte Kamerabild bezüglich des Farbeindruckes für den Betrachter beziehungsweise insbesondere bezüglich der Farbinformation der jeweiligen korrespondierenden Bildpixel im Überlappungsbereich voneinander. Beispielsweise erfasst die dritte Kamera 103 einen durch die Sonne überbelichteten linken Umgebungsbereich 113 und die vierte Kamera 104 einen aufgrund von Verschattungen dunklen Umgebungsbereich 114, wodurch das dritte und vierte Kamerabild eine sehr unterschiedliche Farbinformation im Überlappungsbereich 123 aufweisen. Ein Modell, welches beispielsweise das dritte Kamerabild und das vierte Kamerabild jeweils ohne Anpassung mindestens eines Teilbereichs eines Kamerabildes bezüglich der Farbinformation umfasst, würde für einen Betrachter aufgrund der Unterschiede in der Farbinformation zwischen den Kamerabildern am oder im Überlappungsbereich 123 unrealistisch beziehungsweise zusammengesetzt wirken, da beispielsweise die Übergänge zwischen dem dritten und vierten Kamerabild in diesem Fall nicht stetig beziehungsweise deutlich sichtbar wären. Im Ausführungsbeispiel aus Figur 1 liegt ein dreidimensionales Objekt 150 mit einer Objekthöhe in der Umgebung des Ego-Objektes 100 vor. Dadurch enthalten das erste Kamerabild und das zweite Kamerabild das Objekt 150. Ferner werden ein erster Bereich 151 hinter dem Objekt 150 von der ersten Kamera 101 und ein zweiter Bereich 152 hinter dem Objekt 150 von der zweiten Kamera 102 nicht erfasst.

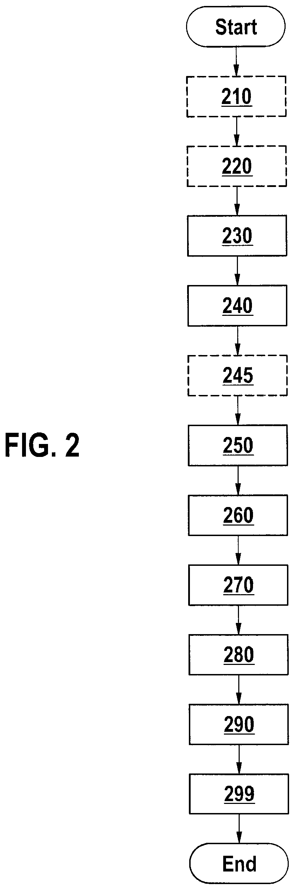

Das in Figur 2 dargestellte Ablaufdiagramm des erfindungsgemäßen Verfahrens minimiert vorteilhafterweise Verzerrungen in der Darstellung des Umgebungsmodells, welche aufgrund von Objekten 150 in der Umgebung des Ego-Objektes 100 resultieren, und harmonisiert die Unterschiede in der Farbinformation zwischen zwei Kamerabildern. Das Verfahren kann bei einer Erfassung von mehr als zwei Kamerabildern für eine gemeinsame Darstellung benachbarter Kamerabilder beziehungsweise für jeden Überlappungsbereich 121, 122, 123 und/oder 124 separat beziehungsweise wiederholt durchgeführt werden. Durch das Verfahren resultiert beispielsweise in einer Darstellung eines Umgebungsmodells trotz einer unterschiedlichen Beleuchtungssituation in den Umgebungsbereichen 111, 112, 113 und/oder 114 eine harmonische Farbinformation des gemeinsamen Umgebungsmodells, welches das erste bis vierte Kamerabild umfasst. Die Harmonisierung der Farbinformationen erfolgt jeweils zwischen zwei Kamerabildern.

Zunächst erfolgt gemäß Figur 2 eine optionale Erfassung 210 von Abstandsdaten zwischen dem Ego-Objekt 100 und Objekten 150 in der Umgebung des Ego-Objektes 100 mittels mindestens eines Abstandssensors 130, wobei der Abstandssensor 130 bevorzugt eine Monokamera, beispielsweise die erste Kamera 101, und/oder mindestens einen Ultraschallsensor umfasst. Anschließend wird im optionalen Schritt 220 eine dreidimensionale Gitterstruktur in Abhängigkeit der erfassten Abstandsdaten erzeugt beziehungsweise angepasst. Beispielsweise wird die Gitterstruktur in Abhängigkeit einer durch ein structure-from-motion-Verfahren in Abhängigkeit einer Abfolge von Kamerabildern ermittelten dreidimensionalen Punktwolke beziehungsweise Abstandsdaten erzeugt. Die erzeugte beziehungsweise angepasste Gitterstruktur repräsentiert die räumlichen beziehungsweise dreidimensionalen Abstände zwischen dem Ego-Objekt 100 und Objekten 150 in der Umgebung 110 des Ego-Objektes 100. Im Verfahrensschritt 230 wird das erste Kamerabild mittels der ersten Kamera 101 erfasst. In einem weiteren Schritt 240 wird das zweite Kamerabild mittels der zweiten Kamera 102 erfasst, wobei das erste Kamerabild und das zweite Kamerabild den Überlappungsbereich 121 aufweisen. Das erste Kamerabild und das zweite Kamerabild umfassen jeweils eine Vielzahl von Bildpunkten mit jeweils einer Farbinformation, beispielsweise einem Helligkeitswert oder einer Farbcodierung, wobei diese Farbinformation insbesondere mittels der ersten beziehungsweise zweiten Kamera automatisch eingestellt wird. In einem optionalen Schritt 241 (nicht dargestellt) kann eine Vorverarbeitung des erfassten ersten und/oder zweiten Kamerabildes mindestens an vorgegebenen Punkten im Überlappungsbereich 121 durchgeführt werden. Im optionalen Schritt 245 werden Segmente im ersten und/oder zweiten Kamerabild erkannt. Die Erkennung der Segmente erfolgt beispielsweise durch eine Mustererkennung mittels eines neuronalen Netzes. Beispielsweise wird jeweils ein Fahrbahnbereich oder ein Himmelbereich oder ein Objektbereich im ersten und/oder zweiten Kamerabild als Segment erkannt. In einem Schritt 250 erfolgt mindestens für vorgegebene Punkte der dreidimensionalen Gitterstruktur eine Zuordnung der Bildpunkte des ersten Kamerabildes und des zweiten Kamerabildes gemäß einer jeweils vorgegebenen Zuordnungsvorschrift, das heißt die Kamerabilder werden zumindest an den vorgegebenen Punkten auf die Gitterstruktur abgebildet. Die vorgegebenen Punkte sind in zumindest einem Teilbereich der Gitterstruktur, welcher den Überlappungsbereich 121 repräsentiert, angeordnet. Beispielsweise sind die vorgegebenen Punkte in diesem Teilbereich der Gitterstruktur, welcher den Überlappungsbereich 121 repräsentiert, gleichmäßig in einem Raster angeordnet. Es können beispielsweise mehr als hundert vorgegebene Punkte vorgesehen sein. Durch die Zuordnung 250 der Bildpunkte des ersten Kamerabildes und des zweiten Kamerabildes zu der dreidimensionalen Gitterstruktur werden zumindest den vorgegebenen Punkten der Gitterstruktur jeweils eine erste Farbinformation eines Bildpunktes des ersten Kamerabildes und eine zweite Farbinformation eines Bildpunktes des zweiten Kamerabildes zugeordnet. Anschließend wird für jeden vorgegebenen Punkt eine Ermittlung 260 eines Farbinformationsunterschiedes durchgeführt, wobei an einem vorgegebenen Punkt der Farbinformationsunterschied jeweils mindestens in Abhängigkeit der dort zugeordneten ersten Farbinformation und der dort zugeordneten zweiten Farbinformation ermittelt wird. Es kann in einer Weiterführung optional vorgesehen sein, dass die Ermittlung des Farbinformationsunterschieds an einem vorgegebenen Punkt zusätzlich in Abhängigkeit der Farbinformationen des ersten und/oder zweiten Kamerabildes in einer Umgebung der jeweiligen vorgegebenen Punkte und/oder entlang mindestens eines Bereichs einer Epipolarlinie zu dem vorgegebenen Punkt erfolgt. Die Umgebung kann dabei auf verschiedene Arten definiert sein, beispielsweise als eine Matrix, insbesondere eine 5×5-Matrix, als ein gleichmäßiges Raster oder als ein Punktmuster in der Umgebung des jeweiligen vorgegebenen Punktes. An den jeweiligen vorgegebenen Punkten erfolgt anschließend ferner eine Ermittlung 270 eines Gütewertes in Abhängigkeit des für den jeweiligen vorgegebenen Punkt ermittelten Farbinformationsunterschieds. Das Gütewert kann optional zusätzlich in Abhängigkeit der Farbinformationen des ersten und/oder zweiten Kamerabildes in einer Umgebung des jeweiligen vorgegebenen Punktes und/oder entlang mindestens eines Bereichs der Epipolarlinie erfolgen. Der Gütewert repräsentiert eine Korrelation zwischen dem ersten und dem zweiten Kamerabild an dem vorgegebenen Punkt der dreidimensionalen Gitterstruktur. Optional erfolgt die Ermittlung 270 des Gütewertes zusätzlich in Abhängigkeit der erkannten Segmente im ersten und/oder zweiten Kamerabild. In einer weiteren optionalen Ausgestaltung erfolgt die Ermittlung 270 des Gütewertes an einem jeweils vorgegebenen Punkt zusätzlich in Abhängigkeit der Farbinformationen in der Umgebung des jeweiligen vorgegebenen Punktes und/oder entlang des Bereichs der zum vorgegebenen Punkt im ersten und/oder zweiten Kamerabild zugeordneten Epipolarlinie. Es kann ferner vorgesehen sein, dass die Ermittlung des Gütewertes 270 zusätzlich in Abhängigkeit der erfassten Abstandsdaten durchgeführt wird. In einem weiteren Schritt 280 wird eine globale Farbtransformationsmatrix in Abhängigkeit der ermittelten Vielzahl an Farbinformationsunterschieden bestimmt, wobei die ermittelten Farbinformationsunterschiede jeweils in Abhängigkeit der ermittelten Gütewerte des jeweiligen vorgegebenen Punktes gewichtet werden. In einer optionalen Weiterbildung wird im Schritt 280 die globale Farbtransformationsmatrix zusätzlich in Abhängigkeit erfasster Abstandsdaten bestimmt. Die Ermittlung 270 des Gütewertes oder die Bestimmung 280 der Farbtransformationsmatrix kann vorteilhafterweise in Abhängigkeit vorgegebener Punkte der dreidimensionalen Gitterstruktur erfolgen, welche in einem Bereich größer oder gleich einem Mindestabstand und/oder kleiner oder gleich einem vorgegebenen Abstand zum Ego-Objekt 100 liegen. Danach wird im Schritt 290 das zweite Kamerabild mindestens in einem Teilbereich in Abhängigkeit der bestimmten Farbtransformationsmatrix angepasst. Abschließend erfolgt eine Anzeige 299 eines Umgebungsmodells des Ego-Objektes 100 in Abhängigkeit der dreidimensionalen Gitterstruktur, zumindest eines Teilbereichs des ersten Kamerabildes und zumindest des Teilbereichs des angepassten zweiten Kamerabildes. Optional erfolgt die Anzeige des Umgebungsmodells zusätzlich in Abhängigkeit der angepassten dreidimensionalen Gitterstruktur. Die Anzeige des gemeinsamen Umgebungsmodells umfasst bevorzugt in einem Bereich, welcher den Überlappungsbereich repräsentiert, das erste Kamerabild oder das angepasste zweite Kamerabild oder eine Kombination des ersten und zweiten Kamerabildes. Das Verfahren kann ferner beispielsweise für weitere Kamerabilder mit einem Überlappungsbereich zum ersten und/oder zweiten Kamerabild durchgeführt werden, so dass beispielsweise für das Ego-Objekt 100 aus Figur 1 ein Umgebungsmodell mit harmonisierter Farbinformation resultiert.

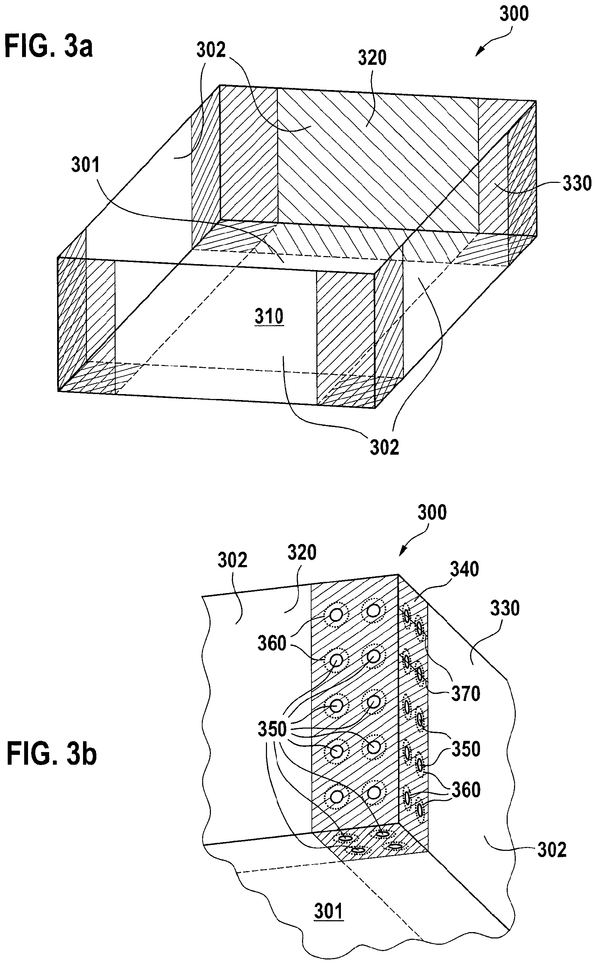

In Figur 3a ist eine rechteckige dreidimensionale Gitterstruktur 300 dargestellt. Die Gitterstruktur 300 umfasst eine Bodenfläche 301 und vier Seitenflächen 302. Auf die Gitterstruktur 300 beziehungsweise auf die Bodenfläche 301 und auf die Seitenflächen 302 werden zur Anzeige 299 des Umgebungsmodells Kamerabilder beziehungsweise das erste, zweite, dritte und/oder vierte Kamerabild projiziert. Beispielsweise wird auf den Bereich 320 der Gitterstruktur 300, welcher den mittels der ersten Kamera 101 erfassten Umgebungsbereiche 111 repräsentiert, das erste Kamerabild und auf den Bereich 330 der Gitterstruktur 300, welcher den mittels der zweiten Kamera 102 erfassten Umgebungsbereiche 112 repräsentiert, das zweite Kamerabild projiziert. Der Teilbereich 310 der dreidimensionalen Gitterstruktur entspricht dem Bereich, in dem das Ego-Objekt 100, beispielsweise ein Fahrzeug, angeordnet ist. Der Teilbereich 310 wird folglich nicht durch eine Kamera erfasst und kann beispielsweise durch ein dreidimensionales synthetisches Modell des Ego-Objektes 100 ausgefüllt werden. Die Anzeige des Umgebungsmodells kann aus einer beliebigen Beobachterperspektive auf die dreidimensionale Gitterstruktur 300 erfolgen und gegebenenfalls im Betrieb angepasst werden, beispielsweise in Abhängigkeit erfasster Abstandsdaten beziehungsweise, wenn ein Objekt 150 in der Umgebung 110 des Ego-Objektes 100 einen Abstand zum Ego-Objekt 100 unterschreitet. Vorzugsweise erfolgt die Anzeige des Umgebungsmodells aus einer Beobachterperspektive in Fahrtrichtung des Ego-Objektes 100 von schräg oben auf die dreidimensionale Gitterstruktur 300. In einer optionalen Ausgestaltung der Erfindung kann es vorgesehen sein, dass die rechteckige dreidimensionale Gitterstruktur 300 in Abhängigkeit von erfassten Abstandsdaten zwischen dem Ego-Objekt 100 und Objekten 150 in der Umgebung 110 des Ego-Objektes 100 angepasst wird. Dazu werden beispielsweise Bereiche der dreidimensionalen Gitterstruktur 300 angepasst, das heißt angehoben und/oder verbogen, wodurch diese angepassten Bereiche der Gitterstruktur 300 die Objekte 150 repräsentieren.

In Figur 3b ist die dreidimensionale Gitterstruktur 300 aus Figur 3a aus einer anderen Beobachterperspektive dargestellt. Ein Bereich 340 der dreidimensionalen Gitterstruktur repräsentiert den Überlappungsbereich 121 des ersten und zweiten Kamerabildes. Der Bereich 340 ist in diesem Ausführungsbeispiel in einem Eckbereich der dreidimensionalen Gitterstruktur 300 angeordnet. In diesem Bereich 340, welcher den Überlappungsbereich 121 repräsentiert, sind die vorgegebenen Punkte 350 angeordnet. Es können eine Vielzahl an vorgegebenen Punkten vorgesehen sein, beispielsweise eine Anzahl größer hundert. Jedem vorgegebenen Punkt 250 werden eine Farbinformation eines Bildpixels des ersten Kamerabildes als auch eine zweite Farbinformation eines Bildpixels des zweiten Kamerabildes zugeordnet. An den vorgegebenen Punkten 350 lassen sich folglich Farbinformationsunterschiede zwischen den Bildpunkten des ersten und zweiten Kamerabildes bestimmen. Sowohl die Bodenfläche 301 als auch die Seitenflächen 302 weisen im Bereich 340, welcher den Überlappungsbereich 121 repräsentiert, vorgegebene Punkte 350 auf. Es kann vorkommen, dass die vorgegebenen Punkte in einem in Abhängigkeit von Abstandsdaten angepassten Bereich 340 der Gitterstruktur 300 liegen. In einer Ausführung kann es vorgesehen sein, dass die Ermittlung des Gütewertes und/oder die Bestimmung der Farbtransformationsmatrix in Abhängigkeit vorgegebener Punkte in einem lateralen Abstandsbereich zu dem Ego-Objekt 100 und/oder vorgegebener Punkte, welche eine Höhe größer einer vorgegebenen Höhe aufweisen, durchgeführt wird. An jedem der vorgegebenen Punkte 350 wird ein Unterschied der Farbinformation zwischen dem ersten Kamerabild und dem zweiten Kamerabild bestimmt. An jedem vorgegebenen Punkt 350 wird anschließend des Weiteren ein Gütewert für diesen vorgegebenen Punkt in Abhängigkeit des bestimmten Farbinformationsunterschieds an diesem vorgegebenen Punkt ermittelt. Die Bestimmung 280 der Farbtransformationsmatrix erfolgt in Abhängigkeit des ermittelten Farbinformationsunterschieds jedes vorgegebenen Punktes 350, wobei der Farbinformationsunterschied des jeweiligen vorgegebenen Punktes 350 in Abhängigkeit des jeweiligen Gütewertes an diesem vorgegebenen Punkt gewichtet wird. In Weiterführungen der Erfindung kann vorgesehen sein, dass Farbinformationsunterschiede in einer Umgebung 360 und/oder entlang eines Bereichs der Epipolarlinie 370 des jeweiligen vorgegebenen Punktes 350 bestimmt und der Gütewert in Abhängigkeit der bestimmten Farbinformationsunterschiede in der Umgebung 360 und/oder entlang des Bereichs der Epipolarlinie 370 des jeweiligen vorgegebenen Punktes 350 ermittelt werden. In einer weiteren Ausführung kann es vorgesehen sein, dass die Bestimmung 280 der Farbtransformationsmatrix zusätzlich in Abhängigkeit der erfassten Abstandsdaten erfolgt, wobei beispielsweise vorgegebene Punkten 350 zusätzlich in Abhängigkeit der Abstandsdaten gewichtet werden.

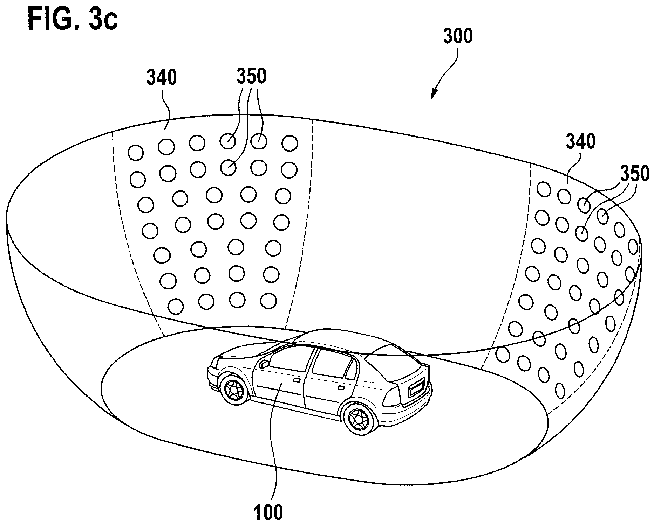

In Figur 3c ist eine alternative dreidimensionale Gitterstruktur 300 mit einer Wannenform dargestellt. Das Ego-Objekt 100, insbesondere ein Fahrzeug, ist in der Mitte der wannenförmigen Gitterstruktur 300 als synthetisches Objekt angeordnet. Eine Anzeige 299 des Umgebungsmodells kann eine solche wannenförmige Gitterstruktur 300 umfassen, wobei die Darstellung aus einer beliebigen Beobachterperspektive erfolgen kann. Auf die wannenförmige Gitterstruktur 300 können die Kamerabilder projiziert werden. In den Bereichen 340 der wannenförmigen Gitterstruktur 300, welche Überlappungsbereiche 121, 122, 123, 124 zwischen den Kamerabildern repräsentieren, sind jeweils vorgegebene Punkte 350 angeordnet. Die vorgegebenen Punkte eines Bereiches 340, welcher einen Überlappungsbereiche 121 repräsentiert, werden jeweils zur Ermittlung der Farbinformationsunterschiede sowie zur Bestimmung der Gütewerte und der Farbtransformationsmatrix verwendet. In einer optionalen Ausgestaltung der Erfindung kann es vorgesehen sein, dass die wannenförmige Gitterstruktur 300 in Abhängigkeit von erfassten Abstandsdaten zwischen dem Ego-Objekt 100 und Objekten 150 in der Umgebung 110 des Ego-Objektes 100 angepasst wird. Dazu werden beispielsweise Bereiche der wannenförmigen Gitterstruktur 300 angepasst, das heißt angehoben und verbogen, wodurch diese angepassten Bereiche der Gitterstruktur 300 die Objekte 150 repräsentieren.

Den vorgegebenen Punkten im Überlappungsbereich zweier Kameras beziehungsweise auf der Gitterstruktur sind jeweils zwei Farbinformationen zugeordnet, das heißt die erste Farbinformation des ersten Kamerabildes und die zweite Farbinformation des zweiten Kamerabildes. Als Farbinformation wird ein Vektor ($\vec{c}$) im RGB-Farbraum (z.B. sRGB) angenommen, wobei die Farbinformation beispielsweise einzelne Farbwerte (rot, grün und blau) umfasst. In einem Kamerabild können nicht-lineare Effekte vorliegen, zum Beispiel eine Kameravignettierung (Verdunkelung in den Randbereich des Bildes) und/oder ein Tonemapping. Um die nachfolgende Farbtransformationsmatrix zu bestimmen, können die Farbinformationen an den vorgegebenen Punkten beziehungsweise die entsprechenden Farbwerte optional linearisiert werden. Falls die Kamera beispielsweise signifikante Vignettierung aufweist, ist es vorteilhaft diese zu kompensieren. Die Vignettierung wird beispielsweise nur eindimensional betrachtet und nimmt radial vom Bildzentrum ausgehend zu und wird beispielsweise durch ein Polynom 6. Grades gut approximiert: $f(r) = 1 + ar^2 + br^4 + cr^6$, von dem die 3 Koeffizienten (a,b,c) bestimmen werden müssen. Dabei ist der Radius r relativ zum Bildzentrum (0.5, 0.5). Die Eingangs-Farbwerte ($\vec{c}_{in}$) im Bild können dann korrigiert werden:

$$\vec{c}_{out} = \vec{c}_{in}\frac{1}{f(r)}.$$

Für die Linearisierung eines Kamerabildes sollte eine Kamerakennlinie bekannt sein. Als Alternative reicht oft eine einfache Gammakorrektur: $\vec{c}_{lin} = (\vec{c}_{out})^{\gamma}$. Der Parameter Gamma (γ) ist oft ein Wert zwischen 1,0 und 3,0.

Die Farbtransformationsmatrix (nachfolgend als Variable *x* bezeichnet) kann beispielsweise direkt mit der Methode-der-kleinsten Quadrate in Abhängigkeit der vorgegebenen Punkte und der jeweils zugeordneten Farbinformationen gelöst werden. Dabei werden die Farbinformationen zweier Bildpunkte des ersten und zweiten Kamerabildes an einem vorgegebenen Punkt im Überlappbereich in Korrespondenz gesetzt:

$$\vec{c}_{1,i} \leftrightarrow \vec{c}_{2,i} = (c_{1,i}^r, c_{1,i}^g, c_{1,i}^b) \leftrightarrow (c_{2,i}^r, c_{2,i}^g, c_{2,i}^b)$$

ist dabei die i-te (RGB) Farbkorrespondenz zwischen zwei Punkten in dem Quell- (1) und Zielbild (2) an den entsprechenden Pixelpositionen $p_{1,i} \leftrightarrow p_{2,i}$.

Zudem werden auch die Gütewerte als Gewichte (W) mit in die Ermittlung der Farbtransformationmatrix einbezogen. Das Problem lässt sich dann mathematisch wie folgt formulieren

$$\min_x \|WAx - Wb\|_2^2 + \lambda\|Fx - g\|_2^2,$$

wobei *x* die gesuchte optimale Farbtransformationsmatrix (beispielsweise ein 12 Parameter-Vektor), *W* die normalisierte Diagonalmatrix mit den berechneten Gütewerten $w(p_{1,i}, p_{2,i})$ ist. Die anderen Variablen werden beispielsweise wie folgt definiert:

$$A = \begin{bmatrix} c_{1,0}^r & c_{1,0}^g & c_{1,0}^b & 1 & 0 & 0 & 0 & 0 & 0 & 0 & 0 & 0 \\ c_{1,1}^r & c_{1,1}^g & c_{1,1}^b & 1 & 0 & 0 & 0 & 0 & 0 & 0 & 0 & 0 \\ & & & & & \vdots & & & & & & \\ c_{1,n}^r & c_{1,n}^g & c_{1,n}^b & 1 & 0 & 0 & 0 & 0 & 0 & 0 & 0 & 0 \\ 0 & 0 & 0 & 0 & c_{1,0}^r & c_{1,0}^g & c_{1,0}^b & 1 & 0 & 0 & 0 & 0 \\ & & & & & \vdots & & & & & & \\ 0 & 0 & 0 & 0 & c_{1,n}^r & c_{1,n}^g & c_{1,n}^b & 1 & 0 & 0 & 0 & 0 \\ 0 & 0 & 0 & 0 & 0 & 0 & 0 & 0 & c_{1,0}^r & c_{1,0}^g & c_{1,0}^b & 1 \\ & & & & & \vdots & & & & & & \\ 0 & 0 & 0 & 0 & 0 & 0 & 0 & 0 & c_{1,n}^r & c_{1,n}^g & c_{1,n}^b & 1 \end{bmatrix}, b = \begin{bmatrix} c_{2,0}^r \\ c_{2,1}^r \\ \vdots \\ c_{2,n}^r \\ c_{2,0}^g \\ \vdots \\ c_{2,n}^g \\ c_{2,0}^b \\ \vdots \\ c_{2,n}^b \end{bmatrix}$$

und

$$F = \begin{bmatrix} 1 & & \mathbf{0} \\ & \ddots & \\ \mathbf{0} & & 1 \end{bmatrix}_{12x12}, g = [1,0,0,0,0,1,0,0,0,0,1,0]^T.$$

Die Lösung dieser Gleichung ist kompakt definiert mittels der Normalgleichung:

$$\begin{aligned} x &= (A^TA + \lambda * F^TF)^{-1} * (A^Tb + \lambda * F^Tg) \\ &= (A'^TA')^{-1} * (A'^Tb') \end{aligned}$$

$$A' = \begin{bmatrix} A \\ \sqrt{\lambda} * F \end{bmatrix}, \; b' = \begin{bmatrix} b \\ \sqrt{\lambda} * g \end{bmatrix}$$

wobei . Lambda ist beispielsweise zwischen 0,01 und 1,00 gesetzt. Die Matrix W wird nicht explizit aufgestellt, sondern direkt mit der Matrix A und dem Vektor b ausmultipliziert, d.h., die Farbinformationen des ersten Kamerabildes ($\vec{c}_{1,i}$) und die Farbinformationen des zweiten Kamerabildes ($\vec{c}_{2,i}$) werden direkt mit den entsprechenden Gütewerten $w(p_{1,i}, p_{2,i})$ multipliziert.

Für eine glattere, flickerfreie Anzeige (299) des Umgebungsmodells ist es empfehlenswert die berechnete Farbtransformationsmatrix zeitlich zu filtern. Beispielsweise kann die aktuelle Farbtransformationsmatrix ($x_t$) exponentiell mit der vom vorigen Zeitschritt ($x_{t-1}$) gemittelt werden:

$$x_t = a * x + (1 - a) * x_{t-1},$$

Ein guter Wert für a liegt beispielsweise zwischen 0,1 und 0,5.

Das beispielhaft beschriebene Verfahren dient zur Ermittlung der Farbtransformationsmatrix im linearen RGB Farbraum. Alternativ kann die Farbtransformationsmatrix in einem anderen Farbraum, beispielsweise YUV oder CIELab, oder alternativ auf Grauwerten bestimmt werden.

Für das Verfahren können Gütewerte auf verschiedene Art und Weise im Schritt 270 ermittelt werden. Ein robuster Gütewert gewichtet Farbinformationsunterschiede beziehungsweise falsche Farbkorrespondenzen zwischen dem ersten und zweiten Kamerabild, beispielsweise Farbinformationen an einem vorgegebenen Punkt, welche nicht zum gleichen Objekt oder Szenenpunkt gehören, niedrig und alle anderen hoch. Das im Folgenden vorgestellte Epipolar-Gütemaß als Gütewert nutzt das vorhandene Wissen über die Einbaukalibrierung der Kameras und berechnet eine Varianz der Farbinformation entlang von Epipolarlinien (oder Kurven) im ersten und/oder zweiten Kamerabild, wobei die jeweilige Epipolarlinie einem vorgegebenen Punkt der Gitterstruktur beziehungsweise des jeweils anderen Kamerabildes zugeordnet ist. Diese Epipolarlinien sind aufgrund der fest zueinanderstehenden Kameras vorgegeben und können auch aus dem Speicher gelesen werden. Entlang dieser Epipolarlinien wird im Schritt 260 und/oder im Schritt 270 beispielsweise im zweiten Kamerabild für einen vorgegebenen Punkt jeweils eine entsprechende Anzahl an Farbinformationen abgetastet (z.B. $n$ = 30) und davon für jeden Farbkanal (rot, grün, blau) die Varianz bestimmt und dem entsprechenden vorgegebenen Punkt zugeordnet. Anschließend wird der Farbunterschied und/oder der Gütewert in Abhängigkeit der Varianz der Farbinformation entlang der Epipolarlinie an dem jeweiligen vorgegebenen Punkt bestimmt. Der Gütewert für einen Farbkanal wird beispielsweise wie folgt berechnet:

$$w(p_1, p_2) = \max \left( \sigma, 1 - s * \sqrt{\frac{1}{n} \sum_{i=0}^{n} \left\{ c_2 \left( p_2^l + \left( \frac{i}{n} \right) * (p_2^u - p_2^l) \right) - \bar{c}_2 \right\}^2} \right),$$

wobei $p_2^l, p_2^u$ die Start- und Endpixelkoordinaten der Epipolarlinie sind; $\overline{c_2}$ ist der durchschnittliche Farbwert entlang der Epipolarlinie, s ist ein Skalierungsfaktor (z.B. s=8), und $\sigma$ ist der minimal erlaubte Wert für den Gütewert (z.B. 0,05). Für Fischaugenkameras ist die Epipolargeometrie keine Linie sondern eine Kurve. Jedoch kann diese durch zwei Epipolarliniensegmente approximiert werden: $x_2^l \to x_2$ and $x_2 \to x_2^u$ (anstelle der Tangente $x_2^l \to x_2^u$). Der so errechnete Gütewert für einen vorgegebenen Punkt und einen Farbkanal kann direkt in die Berechnung der Farbtransformationsmatrix eingesetzt werden (wie zuvor beschrieben).

**Patentansprüche**

1. Verfahren zur Anzeige eines Umgebungsmodells eines Ego-Objektes, aufweisend zumindest die folgenden Schritte

- Erfassung (230) eines ersten Kamerabildes mittels einer ersten Kamera (101),
- Erfassung (240) eines zweiten Kamerabildes mittels einer zweiten Kamera (102), wobei das erste Kamerabild und das zweite Kamerabild einen Überlappungsbereich (121) aufweisen, und das erste und zweite Kamerabild jeweils eine Vielzahl von Bildpunkten mit jeweils einer Farbinformation umfassen,
- Erfassung (210) von Abstandsdaten zwischen dem Ego-Objekt (100) und Objekten (150) in der Umgebung des Ego-Objektes (100),
- Anpassung (220) einer dreidimensionalen Gitterstruktur (300) in Abhängigkeit der erfassten Abstandsdaten, und

• Zuordnung (250) von Bildpunkten des ersten Kamerabildes und Bildpunkten des zweiten Kamerabildes zumindest zu vorgegebenen Punkten (350) der angepassten Gitterstruktur (300) gemäß einer jeweils vorgegebenen Zuordnungsvorschrift, wobei die vorgegebenen Punkte (350) in einem Bereich (340) der dreidimensionalen Gitterstruktur (300) angeordnet sind, welcher den Überlappungsbereich (121) repräsentiert,

• Ermittlung (260) eines Farbinformationsunterschiedes für jeden vorgegebenen Punkt (350) der dreidimensionalen Gitterstruktur (300) in Abhängigkeit der dort zugeordneten Farbinformationen des ersten und zweiten Kamerabildes,

• Ermittlung (270) eines Gütewertes in Abhängigkeit des ermittelten Farbinformationsunterschiedes an dem jeweiligen vorgegebenen Punkt (350),

• Bestimmung (280) einer globalen Farbtransformationsmatrix in Abhängigkeit der ermittelten Vielzahl an Farbinformationsunterschieden, wobei die ermittelten Farbinformationsunterschiede jeweils in Abhängigkeit des zugehörigen Gütewertes des vorgegebenen Punktes (350) gewichtet werden, und

• Anpassung (290) mindestens eines Teilbereichs des zweiten Kamerabildes in Abhängigkeit der bestimmten Farbtransformationsmatrix, und

• Anzeige (299) eines Umgebungsmodells des Ego-Objektes in Abhängigkeit der angepassten dreidimensionalen Gitterstruktur (300), zumindest eines Teilbereichs des ersten Kamerabildes und zumindest eines Teilbereichs eines angepassten zweiten Kamerabildes.

2. Verfahren nach einem der vorhergehenden Ansprüche, **dadurch gekennzeichnet, dass** die Ermittlung (270) des Gütewertes und/oder die Bestimmung (280) der globalen Farbtransformationsmatrix zusätzlich in Abhängigkeit von erfassten Abstandsdaten erfolgt.

3. Verfahren nach Anspruch 2, **dadurch gekennzeichnet, dass** die Bestimmung (280) der globalen Farbtransformationsmatrix nur in Abhängigkeit von Farbunterschieden vorgegebener Punkte der dreidimensionalen Gitterstruktur (300) erfolgt, welche in einem Bereich größer oder gleich einem Mindestabstand und/oder kleiner oder gleich einem vorgegebenen lateralen Abstand zum Ego-Objekt (100) liegen.

4. Verfahren nach einem der vorhergehenden Ansprüche, **dadurch gekennzeichnet, dass** die folgenden Schritte durchgeführt werden,

• Erkennung (245) von Segmenten im ersten Kamerabild und/oder im zweiten Kamerabild, und
• Ermittlung (270) des Gütewertes zusätzlich in Abhängigkeit der erkannten Segmente.

5. Verfahren nach einem der vorhergehenden Ansprüche, **dadurch gekennzeichnet, dass** die Ermittlung (260) des Farbinformationsunterschiedes und/oder die Ermittlung (270) des Gütewertes zusätzlich in Abhängigkeit einer Vielzahl an Farbinformationen des ersten und/oder zweiten Kamerabildes in einer Umgebung (360) des jeweiligen vorgegebenen Punktes (350) erfolgt.

6. Verfahren nach einem der vorhergehenden Ansprüche, **dadurch gekennzeichnet, dass** die Ermittlung (260) des Farbinformationsunterschiedes und/oder die Ermittlung (270) des Gütewertes zusätzlich in Abhängigkeit einer Vielzahl an Farbinformationen des ersten und/oder zweiten Kamerabildes entlang mindestens eines Bereichs einer Epipolarlinie (370) des jeweiligen vorgegebenen Punktes (350) erfolgt.

7. Verfahren nach einem der vorhergehenden Ansprüche, **dadurch gekennzeichnet, dass** die Anzeige des gemeinsamen Modells in einem Bereich, welcher den Überlappungsbereich (121) repräsentiert, das erste Kamerabild oder das angepasste zweite Kamerabild oder eine Kombination des ersten und zweiten Kamerabildes aufweist.

8. Steuergerät zur Durchführung eines Verfahrens nach einem der Ansprüche 1 bis 7.

9. Fahrzeug mit einem Steuergerät nach Anspruch 8.

**Claims**

1. Method for displaying an environment model of an ego object, including at least the following steps:

• capturing (230) a first camera image by means of a first camera (101),

• capturing (240) a second camera image by means of a second camera (102), wherein the first camera image and the second camera image have an overlap region (121), and the first and second camera images each comprise a multiplicity of image points with one colour information item each,

• capturing (210) distance data between the ego object (100) and objects (150) in the surrounding area of the ego object (100),

• adapting (220) a three-dimensional grid structure (300) in dependence on the captured distance data, and

• assigning (250) image points of the first camera image and image points of the second camera image at least to specified points (350) of the adapted grid structure (300) according to a respectively specified assignment rule, wherein the specified points (350) are arranged in a region (340) of the three-dimensional grid structure (300) that represents the overlap region (121),

• ascertaining (260) a colour information difference for each specified point (350) of the three-dimensional grid structure (300) in dependence on the colour information item assigned there of the first and second camera images,

• ascertaining (270) a quality value in dependence on the ascertained colour information difference at the respective specified point (350),

• determining (280) a global colour transformation matrix in dependence on the ascertained multiplicity of colour information differences, wherein the ascertained colour information differences are weighted in each case in dependence on the associated quality value of the specified point (350), and

• adapting (290) at least one partial region of the second camera image in dependence on the determined colour transformation matrix, and

• displaying (299) an environment model of the ego object in dependence on the adapted three-dimensional grid structure (300), of at least a partial region of the first camera image and of at least a partial region of an adapted second camera image.

2.  Method according to any of the preceding claims, **characterized in that** the ascertaining (270) of the quality value and/or the determining (280) of the global colour transformation matrix additionally take(s) place in dependence on captured distance data.

3.  Method according to Claim 2, **characterized in that** the determining (280) of the global colour transformation matrix takes place only in dependence on colour differences of specified points of the three-dimensional grid structure (300) that lie in a region that is greater than or equal to a minimum distance and/or smaller than or equal to a specified lateral distance from the ego object (100).

4.  Method according to any of the preceding claims, **characterized in that** the following steps are performed:

    • detecting (245) segments in the first camera image and/or in the second camera image, and
    • ascertaining (270) the quality value additionally in dependence on the detected segments.

5.  Method according to any of the preceding claims, **characterized in that** the ascertaining (260) of the colour information difference and/or the ascertaining (270) of the quality value additionally take(s) place in dependence on a multiplicity of colour information items of the first and/or second camera image in a surrounding area (360) of the respective specified point (350).

6.  Method according to any of the preceding claims, **characterized in that** the ascertaining (260) of the colour information difference and/or the ascertaining (270) of the quality value additionally take(s) place in dependence on a multiplicity of colour information items of the first and/or second camera image along at least one region of an epipolar line (370) of the respective specified point (350).

7.  Method according to any of the preceding claims, **characterized in that** the displaying of the common model in a region representing the overlap region (121) includes the first camera image or the adapted second camera image or a combination of the first and second camera images.

8.  Control device for carrying out a method according to any of Claims 1 to 7.

9.  Vehicle having a control device according to Claim 8.

**Revendications**

1. Procédé d'affichage d'un modèle d'environnement d'un objet Ego, ledit procédé comprenant au moins les étapes suivantes

   • acquérir (230) une première image de caméra au moyen d'une première caméra (101),
   • acquérir (240) une deuxième image de caméra au moyen d'une deuxième caméra (102), la première image de caméra et la deuxième image de caméra comportant une zone de chevauchement (121), et les première et deuxième images de caméra comprenant chacune un grand nombre de pixels comportant chacun une information de couleur,
   • acquérir (210) des données de distance entre l'objet Ego (100) et des objets (150) dans l'environnement de l'objet Ego (100),
   • adapter (220) une structure de grille tridimensionnelle (300) en fonction des données de distance acquises, et
   • associer (250) des pixels de la première image de caméra et des pixels de la deuxième image de caméra au moins à des points spécifiés (350) de la structure de grille adaptée (300) selon une règle d'association respectivement spécifiée, les points spécifiés (350) étant disposés dans une zone (340) de la structure de grille tridimensionnelle (300) qui représente la zone de chevauchement (121),
   • déterminer (260) une différence d'informations de couleur pour chaque point spécifié (350) de la structure de grille tridimensionnelle (300) en fonction des informations de couleur, qui y sont associées, des première et deuxième images de caméra,
   • déterminer (270) une valeur de qualité en fonction de la différence d'informations de couleur déterminée au point spécifié respectif (350),
   • stipuler (280) une matrice de transformation de couleur globale en fonction du grand nombre déterminé de différences d'informations de couleur, les différences d'informations de couleur déterminées étant chacune pondérées en fonction de la valeur de qualité associée du point spécifié (350), et
   • adapter (290) au moins une partie de la deuxième image de caméra en fonction de la matrice de transformation de couleur stipulée, et
   • afficher (299) un modèle d'environnement de l'objet Ego en fonction de la structure de grille tridimensionnelle adaptée (300), d'au moins une partie de la première image de caméra et d'au moins une partie d'une deuxième image de caméra adaptée.

2. Procédé selon l'une des revendications précédentes, **caractérisé en ce que** la détermination (270) de la valeur de qualité et/ou la stipulation (280) de la matrice de transformation de couleur globale sont effectuées également en fonction de données de distance acquises.

3. Procédé selon la revendication 2, **caractérisé en ce que** la stipulation de la matrice de transformation de couleur globale est effectuée (280) uniquement en fonction des différences de couleur de points spécifiés de la structure de grille tridimensionnelle (300) qui sont situés dans une zone supérieure ou égale à une distance minimale et/ou inférieure ou égale à une distance latérale spécifiée par rapport à l'objet Ego (100) .

4. Procédé selon l'une des revendications précédentes, **caractérisé en ce que** les étapes suivantes sont réalisées,

   • détecter (245) des segments dans la première image de caméra et/ou dans la deuxième image de caméra, et
   • déterminer (270) la valeur de qualité en plus en fonction des segments détectés.

5. Procédé selon l'une des revendications précédentes, **caractérisé en ce que** la détermination (260) de la différence d'informations de couleur et/ou la détermination (270) de la valeur de qualité dépendent en outre d'un grande nombre d'informations de couleur des première et/ou deuxième images de caméra dans un environnement (360) du point spécifié respectif (350) .

6. Procédé selon l'une des revendications précédentes, **caractérisé en ce que** la détermination (260) de la différence d'informations de couleur et/ou la détermination (270) de la valeur de qualité dépendent également d'un grande nombre d'informations de couleur des première et/ou deuxième images de caméra le long d'au moins une zone d'une ligne épipolaire (370) du point spécifié respectif (350).

7. Procédé selon l'une des revendications précédentes, **caractérisé en ce que** l'affichage du modèle commun dans une zone qui représente la zone de chevauchement (121) comporte la première image de caméra ou la deuxième image de caméra adaptée ou une combinaison des première et deuxième images de caméra.

8. Unité de commande destinée à la mise en œuvre d'un procédé selon l'une des revendications 1 à 7.

9. Véhicule comprenant une unité de commande selon la revendication 8.

# FIG. 1

**FIG. 2**

```
        ┌──────────┐
        │  Start   │
        └──────────┘
              │
        ┌ ─ ─ ─ ─ ─ ┐
             210
        └ ─ ─ ─ ─ ─ ┘
              │
        ┌ ─ ─ ─ ─ ─ ┐
             220
        └ ─ ─ ─ ─ ─ ┘
              │
        ┌──────────┐
        │   230    │
        └──────────┘
              │
        ┌──────────┐
        │   240    │
        └──────────┘
              │
        ┌ ─ ─ ─ ─ ─ ┐
             245
        └ ─ ─ ─ ─ ─ ┘
              │
        ┌──────────┐
        │   250    │
        └──────────┘
              │
        ┌──────────┐
        │   260    │
        └──────────┘
              │
        ┌──────────┐
        │   270    │
        └──────────┘
              │
        ┌──────────┐
        │   280    │
        └──────────┘
              │
        ┌──────────┐
        │   290    │
        └──────────┘
              │
        ┌──────────┐
        │   299    │
        └──────────┘
              │
        ┌──────────┐
        │   End    │
        └──────────┘
```

FIG. 3a

302  320  300

301

330

310

302

FIG. 3b

302  320  300

340

360  330

370

350

350

350

360

301

302

FIG. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9509909 B2